(19) Europäisches Patentamt
European Patent Office
Office européen des brevets

(11) EP 1 053 278 B1

(12) **EUROPÄISCHE PATENTSCHRIFT**

(45) Veröffentlichungstag und Bekanntmachung des Hinweises auf die Patenterteilung:
**06.05.2004 Patentblatt 2004/19**

(21) Anmeldenummer: **99908867.7**

(22) Anmeldetag: **10.02.1999**

(51) Int Cl.[7]: **C08J 5/18**, C08L 23/10
// (C08L23/10, 57:02),
C08L91:00

(86) Internationale Anmeldenummer:
**PCT/EP1999/000847**

(87) Internationale Veröffentlichungsnummer:
**WO 1999/041300 (19.08.1999 Gazette 1999/33)**

(54) **SIEGELFÄHIGE BIAXIAL ORIENTIERTE POLYPROPYLENFOLIE MIT VERBESSERTEN EIGENSCHAFTEN HINSICHTLICH BARRIERE**

SEALABLE, BIAXIALLY ORIENTED POLYPROPYLENE FILM WITH IMPROVED BARRIER PROPERTIES

FILM DE POLYPROPYLENE SCELLABLE, PRESENTANT UNE ORIENTATION BIAXIALE ET DES PROPRIETES BARRIERE AMELIOREES

(84) Benannte Vertragsstaaten:
**AT BE CH CY DE DK ES FI FR GB GR IE IT LI LU MC NL PT SE**

(30) Priorität: **12.02.1998 DE 19805640**
**08.08.1998 DE 19835953**

(43) Veröffentlichungstag der Anmeldung:
**22.11.2000 Patentblatt 2000/47**

(73) Patentinhaber: **Trespaphan GmbH**
**66539 Neunkirchen (DE)**

(72) Erfinder:
- **SPEITH-HERFURTH, Angela**
**D-63329 Egelsbach (DE)**
- **HANSOHN, Robert**
**D-66459 Kirkel (DE)**
- **SCHUHMANN, Detlef**
**D-66583 Spiesen-Elversberg (DE)**
- **ERNST, Frank**
**Zacapu, Michoacan 58600 (MX)**

(74) Vertreter: **Luderschmidt, Schüler & Partner GbR**
**Patentanwälte,**
**John-F.-Kennedy-Strasse 4**
**65189 Wiesbaden (DE)**

(56) Entgegenhaltungen:
**EP-A- 0 441 027**
**WO-A-96/27491**
**WO-A-97/46369**
**US-A- 4 692 386**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Polypropylenfolie mit verbesserten Barriereeigenschaften hinsichtlich Durchtritt von Wasserdampf und verbesserten mechanischen Eigenschaften.

Die Verbesserung der mechanischen Eigenschaften von Folien, insbesondere von Folien für den Verpackungssektor, hat in letzter Zeit an Bedeutung zugenommen. Aus Kosten- und aus Umweltgründen wünscht die Verpackungsindustrie immer dünnere Folien bei gleichbleibender Maschinengängigkeit und gleichbleibenden bzw. verbesserten Barriereeigenschaften, insbesondere hinsichtlich Durchtritt von Wasserdampf.

Dünnere Folien haben jedoch eine überproportional schlechtere Steifigkeit in Maschinenrichtung und damit ein wesentlich schlechteres Maschinenlaufverhalten, insbesondere auf den heutigen schnellaufenden Einschlagsmaschinen. Daneben verringern sich mit der Reduzierung der Foliendicke die Barriereeigenschaften ebenfalls überproportional. Infolge der schlechteren Barriereeigenschaften dünner Folien wird die Schutzwirkung der Folie gegenüber Austrocknung und Verderben des Füllgutes stark eingeschränkt.

Die Erhöhung des Elastizitätsmoduls (E-Modul) in Maschinenrichtung ist seit jeher Gegenstand intensiver Bemühungen, weil diese mechanische Eigenschaft in unmittelbarem Zusammenhang mit der anwendungstechnischen Eignung steht und somit das Verarbeitungsverhalten direkt bestimmt.

Die Barriere von boPP-Folien hinsichtlich Wasserdampf (WDD) und Sauerstoff (SDD) nimmt mit der Foliendicke ab. Im üblichen Dickenbereich von boPP-Folien (4 bis 100 µm) besteht z. B. zwischen der Wasserdampfbarriere (WDD) und der Dicke (d) näherungsweise ein hyperbolischer Zusammenhang (WDD · d = const.). Die Konstante hängt im wesentlichen von der Rohstoffzusammensetzung und den Streckbedingungen ab. Für boPP-Verpackungsfolien nach dem Stand der Technik hat die Konstante einen Wert von etwa: const. = 28 $g \cdot \mu m/m^2 \cdot d$. Die Wasserdampfdurchlässigkeit wurde hierbei nach DIN 53 122 gemessen.

Es ist bekannt, bei boPP-Folien den E-Modul in Maschinenrichtung entweder über die Verfahrenstechnik oder über Rohstoffmodifikationen oder die Kombination beider Möglichkeiten zu erhöhen.

Die Modifizierung von Polypropylenfolien mit verschiedenen Kohlenwasserstoffharzen ist im Stand der Technik bekannt. Eine solche Rohstoffmodifizierung ermöglicht die Herstellung von Polypropylenfolien, deren mechanische Festigkeit in Längsrichtung gegenüber Folien aus unmodifizierten Rohstoffen deutlich verbessert ist, die Werte nachlängsverstreckter Folien jedoch nicht erreicht, und deren Schrumpf in Längsrichtung ebenfalls relativ hoch ist.

In der US-A-4,921,749 (= EP-A-0 247 898) wird eine siegelfähige boPP-Folie mit verbesserten mechanischen und optischen Eigenschaften beschrieben. Ebenfalls verbessert sind die Siegelbarkeit der Folie und die Durchlässigkeit für Wasserdampf und Sauerstoff. Sämtliche Verbesserungen resultieren aus der Zugabe eines niedrigmolekularen Harzes in die Basisschicht. Der Harzanteil beträgt dabei zwischen 3 und 30 Gew.-%. Das Harz hat ein Molekulargewicht deutlich kleiner als 5 000, bevorzugt kleiner als 1 000, und beträgt beispielsweise 600. Der Erweichungspunkt des Harzes liegt bei 120 bis 140 °C.

Die EP-A-0 645 417 beschreibt eine biaxial orientierte Polypropylenfolie deren n-heptanunlöslicher Anteil einen Kettenisotaxie-Index, gemessen mittels $^{13}C$-NMR-Spektroskopie, von mindestens 95 % aufweist. Die Basisschicht enthält 1 bis 15 Gew.-% eines natürlichen oder synthetischen Harzes, welches einen Erweichungspunkt von 70 bis 170 °C besitzt.

Die US 5,155,160 beschreibt die Verbesserung der Barriereeigenschaften durch die Zugabe von Wachs in nicht orientierten Polypropylenfolien. Als Wachse werden Paraffinwachse und Polyethylenwachse mit einem Molekulargewicht von 300 bis 800 beschrieben. Die Barriere soll unter 0,2 g/100 square inches /24 hours liegen.

**EP-A-441027** offenbart Filme aus isotaktischem Polypropylen, HDPE und amorphen Harzen des Molekulargewichts 500-2000. Wachs wird nicht offenbart, aber ein Beispiel beschreibt Mischungen mit zwei Harzen des Molekulargewichts 650 (ESCOREZ=cyclopentadien Harz) und 750 (ARKON=$C_9$ Kohlenwasserstoffharz)

**WO96/27491** beschreibt biaxial orientierte Polaypropylen Filme die Wachs enthalten, aber kein Harz

Es besteht ein kontinuierlicher Bedarf die Wasserdampfbarriere von biaxial orientierten Verpackungsfolien aus Polypropylen weiter zu verbessern. Alle bisher bekannten Methoden reduzieren die Wasserdampfbarriere noch nicht in dem gewünschten Maße oder beeinträchtigen andere wesentliche Folieneigenschaften in nicht akzeptabler Weise.

Die Aufgabe der vorliegenden Erfindung bestand daher darin, eine biaxial orientierte Polypropylenfolie zur Verfügung zu stellen, die sich durch eine gute Wasserdampfbarriere auszeichnet und gute mechanische Eigenschaften aufweist. Die Folie muß lauf- und verfahrenssicher bei Produktionsgeschwindigkeiten von bis zu 400 m/min herstellbar sein. Andere physikalische Folieneigenschaften, die im Hinblick auf ihre Verwendung als Verpackungsfolie gefordert sind, dürfen nicht nachteilig beeinflußt werden. Die Folie soll einen hohen Glanz, keine optischen Defekte in Form von Stippen oder Blasen, eine gute Kratzfestigkeit, bei einer niedrigen Foliendicke einen störungsfreien Lauf auf schnelllaufenden Verpackungsmaschinen und eine niedrige Folientrübung aufweisen. Darüber hinaus dürfen die Siegeleigenschaften nicht nachteilig beeinflußt werden.

Diese Aufgabe wird durch eine mehrschichtige biaxial orientierte Polypropylenfolie aus einer Basisschicht

und mindestens einer siegelfähigen Deckschicht gelöst, deren kennzeichnende Merkmale darin zu sehen sind, daß die Basisschicht eine Kombination aus Harz und Wachs enthält dadurch gekennzeichnet, dass die Basisschicht ein Harz mit einem mittleren Molekulargewicht Mw von 600 bis 1500, wobei das Harz ein Erdölharz, Styrolharz, Cyclopentadienharz oder ein Terpenharz ist, und ein Wachs mit einem mittleren Molekulargewicht Mn von 200 bis 700 enthält, wobei das Wachs ein teil- oder hochkristallines Polyethylenwachs und/oder ein Paraffinwachs ist.

Die Basisschicht der Folie enthält im allgemeinen mindestens 85 Gew.-%, vorzugsweise 85 bis <100 Gew.-%, insbesondere 90 bis 95 Gew.-%, jeweils bezogen auf die Basisschicht, Propylenpolymer.

Im allgemeinen enthält das Propylenpolymer mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenhomopolymere.

Bevorzugt sind isotaktische Propylenhomopolymere mit einem Schmelzpunkt von 140 bis 170 °C, vorzugsweise von 155 bis 165 °C, und einen Schmelzflußindex (Messung DIN 53 735 bei 21,6 N Belastung und 230 °C) von 1,0 bis 10 g/1 0 min, vorzugsweise von 1,5 bis 6,5 g/10 min. Der n-heptanlösliche Anteil des Polymeren beträgt im allgemeinen 1 bis 10 Gew.-%, vorzugsweise 2-5 Gew.-% bezogen auf das Ausgangspolymere.

Die Molekulargewichtsverteilung des Propylenpolymeren kann je nach Anwendungsgebiet in breiten Grenzen variieren. Das Verhältnis des Gewichtsmittels $M_w$ zum Zahlenmittel $M_n$ liegt im allgemeinen zwischen 1 und 15.

In einer bevorzugten Ausführungsform der erfindungsgemäßen Folie liegt das Verhältnis des Gewichtsmittels $M_w$ zum Zahlenmittel $M_n$ bei 2 bis 10, ganz besonders bevorzugt bei 2 bis 6. Eine derartig enge Molekulargewichtsverteilung des Propylenhomopolymeren der Basisschicht erreicht man beispielsweise durch dessen peroxidischen Abbau oder durch Herstellung des Polypropylens mittels geeigneter Metallocenkatalysatoren.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymeren vor dem Zusatz des organischen Peroxids

$MFI_2$ = Schmelzflußindex des peroxidisch abgebauten Propylenpolymeren

Im allgemeinen liegt der Abbaufaktor A des eingesetzten Propylenpolymeren in einem Bereich von 1 bis 15, vorzugsweise 1 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

In einer bevorzugten Ausführungsform der Erfindung ist das eingesetzte Polypropylen hochisotaktisch. Für derartige hochisotaktische Polypropylene beträgt der mittels $^{13}C$-NMR-Spektroskopie bestimmte Kettenisotaxie-Index des n-heptanunlöslichen Anteils des Polypropylens mindestens 95 %, vorzugsweise 96 bis 99 %.

Es wurde gefunden, daß die Auswahl eines derartigen hochisotaktischen Polypropylens in überraschend günstiger Weise zusätzlich verbessernd mit der erfindungsgemäßen Kombination aus Harz und Wachs in der Basisschicht zusammenwirkt und die Wasserdampfbarriere weiter verbessert.

Es ist erfindungswesentlich, daß die Basisschicht ein Kohlenwasserstoffharz mit einem mittleren Molekulargewicht Mw (Gewichtsmittel) von 600 bis 1500, vorzugsweise 700 bis 1200, vorzugsweise in einer Menge von 1 bis 15 Gew.-%, insbesondere 5 bis 12 Gew.-%, bezogen auf das Gewicht der Basisschicht enthält.

Als Kohlenwasserstoffharze kommen grundsätzlich synthetische Harze oder Harze natürlichen Ursprungs in Frage, die im allgemeinen teilweise oder vollständig hydriert sind. Der Erweichungspunkt der Harze liegt im allgemeinen über 80 °C (gemessen nach DIN 1995-U4 bzw. ASTM E-28), wobei solche Harze mit einem Erweichungspunkt von 100 bis 180°C, insbesondere 120 bis 160°C, bevorzugt sind.

Kohlenwasserstoffharze umfassen im Sinne der vorliegenden Erfindung Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffe der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 135°C eingesetzt (bei den ungesättigten Polymerisaten ist das hydrierte Produkt bevorzugt). Ganz besonders bevorzugt werden die Cyclopentadienpolymerisate mit einem Erweichungspunkt von mindestens 140 °C oder Copolymerisate aus α-Methylstyrol und Vinyltoluol mit einem Erweichungspunkt von 120 bis 150 °C in der Basisschicht eingesetzt.

Es ist weiterhin erfindungswesentlich, daß die Basisschicht zusätzlich zu dem Harz ein Wachs mit einem Mn von 200 bis 700 enthält, vorzugsweise in einer Menge von unter 10 Gew.-%, insbesondere 1 bis 8 Gew.-% , insbesondere 1 bis 6 Gew.-% jeweils bezogen auf das Gewicht der Basisschicht. Wachse umfassen im Sinne der vorliegenden Erfindung Polyethylenwachse und/oder makrokristalline Paraffinwachse.

Polyethylenwachse sind niedrigmolekulare Polymere die im wesentlichen aus Ethyleneinheiten aufgebaut und teil- oder hochkristallin sind. Die Polymerketten aus den Ethyleneinheiten sind langgestreckte Moleküle die verzweigt sein können, wobei kürzere Seitenketten überwiegen. Im allgemeinen werden Polyethylenwachse durch direkte Polymerisation des Ethylens, gegebenenfalls unter Einsatz von Reglern, oder durch Depolymerisation von Polyethylenen mit höheren Molmassen hergestellt. Erfindungsgemäß haben die Polyethylenwachse ein mittleres Molekulargewicht Mn (Zahlenmittel) von 200 bis 700, vorzugsweise von 400 bis 600 und vorzugsweise eine Molekulargewichtsverteilung (Polydispersität) Mw/Mn von unter 2, vorzugsweise 1 bis 1,5. Der Schmelzpunkt liegt im allgemeinen im Bereich von 70 bis 150°C, vorzugsweise 80 bis 100°C.

Paraffine umfassen nach allgemeinem Verständnis makrokristalline Paraffine (Paraffinwachse) und mikrokristalline Paraffine (Mikrowachse) . Die makrokristallinen Paraffine werden aus den Vakuumdestillatfraktionen bei deren Verarbeitung auf Schmieröle gewonnen. Die mikrokristallinen Paraffine stammen aus den Rückständen der Vakuumdestillation und den Sedimenten paraffinischer Rohöle (Ausscheidungsparaffine). Die makrokristallinen Paraffine bestehen überwiegend aus n-Paraffinen, die zusätzlich je nach Raffinationsgrad isoParaffine, Naphtene und Alkylaromaten enthalten. Die mikrokristallinen Paraffine bestehen aus einem Gemisch von Kohlenwasserstoffe, die bei Raumtemperatur vorwiegend fest sind. Anders als bei den makrokristallinen Paraffinen sind die isoParaffine und naphtenische Paraffine vorherrschend. Die mikrokristallinen Paraffine zeichnen sich durch das Vorhandensein von kristallisationshemmenden, stark verzweigten iso-Paraffinen und Naphtenen aus. Für die Zwecke der Erfindung sind makrokristalline Paraffine mit einem Schmelzpunkt von 60 bis 100°C, vorzugsweise 60 bis 85°C besonders geeignet.

Es wurde gefunden, daß die Kombination von Wachs und Harz synergistisch zusammenwirkt und die Wasserdampfdurchlässigkeit von orientierten Polypropylenfolien überraschend weiter verbessert, d.h. erniedrigt, wird, wenn das Mn des Wachses in einem Bereich von 200 bis 700 und das Mw des Harzes in einem Bereich von 600 bis 1500 liegt. Es hat sich gezeigt, daß Wachse mit einem Mn von über 700 nicht mit Harz zusammenwirken und keine zusätzliche Erhöhung der Barriere gegenüber Wasserdampf bewirken.

In gleicher Weise ist es wesentlich, daß das Mw des Harzes im Bereich von 600 bis 1500 liegt. Bei Überschreitung des Mw von 1500 verschlechtert sich die Barriere gegenüber solchen Folien die die erfindungsgemäße Kombination aus Harz und Wachs enthalten.

Zusätzlich zu der erfindungswesentlichen Kombination von Harz und Wachs kann die Basisschicht übliche Additive wie Neutralisationsmittel, Stabilisatoren, Antistatika und/oder Gleitmittel in jeweils wirksamen Mengen enthalten.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren wird Glycerinmonostearat in einer Menge von 0,03 % bis 0,5 % bevorzugt als Antistatikum eingesetzt.

Gleitmittel sind höhere aliphatische Säureamide, höhere aliphatische Säureester, Wachse und Metallseifen

sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignetes aliphatisches Säureamid ist Erucasäureamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 $mm^2/s$.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 $m^2/g$.

Die vorstehenden Angaben in Gew-% beziehen sich jeweils auf das Gewicht der Basisschicht.

Die erfindungsgemäße Polypropylenfolie umfaßt mindestens eine, in einer bevorzugten Ausführungsform beidseitig siegelfähige Deckschicht/en aus Polymeren aus $\alpha$-Olefinen mit 2 bis 10 Kohlenstoffatomen.

Beispiele für derartige siegelfähige $\alpha$-olefinische Polymere sind

ein Copolymer von
Ethylen und Propylen oder
Ethylen und Butylen-1 oder
Propylen und Butylen-1 oder
ein Terpolymer von
Ethylen und Propylen und Butylen-1 oder
eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

wobei insbesondere

statistische Ethylen-Propylen-Copolymere mit
einem Ethylengehalt von 1 bis 10 Gew.-%, bevorzugt 2,5 bis 8 Gew.-%, oder
statistische Propylen-Butylen-1-Copolymere mit
einem Butylengehalt von 2 bis 25 Gew.-%, bevorzugt 4 bis 20 Gew.-%,
jeweils bezogen auf das Gesamtgewicht des Copolymeren, oder
statistische Ethylen-Propylen-Butylen-1-Terpolymere mit
einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder ein Blend aus einem Ethylen-Propylen-Butylen-1-Terpolymeren und einem Propylen-Butylen-1-Copolymeren
mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Die in der oder den Deckschicht eingesetzten vorstehend beschriebenen Cound/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230 °C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

Gegebenenfalls können der/den Deckschicht/en die vorstehend für die Basisschicht beschriebenen Additive wie Antistatika, Neutralisationsmittel, Gleitmittel und/oder Stabilisatoren, sowie gegebenenfalls zusätzlich Antiblockmittel zugesetzt werden. Die Angaben in Gew.-% beziehen sich dann entsprechend auf das Gewicht der Deckschicht.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die erfindungsgemäße Folie umfaßt mindestens die vorstehend beschriebene Basisschicht und eine siegelfähige Deckschicht, vorzugsweise beidseitig siegelfähige Deckschichten.

Bevorzugte Ausführungsformen der Polypropylenfolie sind dreischichtig. Aufbau, Dicke und Zusammensetzung einer zweiten Deckschicht können unabhängig von der bereits vorhandenen Deckschicht gewählt werden, wobei die zweite Deckschicht ebenfalls eine der vorstehend beschriebenen Polymeren oder Polymermischungen enthalten kann, welche aber nicht mit der der ersten Deckschicht identisch sein muß.

Die Dicke der siegelfähigen Deckschicht/en ist größer als 0,1 µm und liegt vorzugsweise im Bereich von 0,3 bis 3 µm, insbesondere 0,4 bis 1,5 µm, wobei beidseitige Deckschichten gleich oder verschieden dick sein können.

Die Gesamtdicke der erfindungsgemäßen Polypropylenfolie kann innerhalb weiter Grenzen variieren und richtet sich nach dem beabsichtigten Einsatz. Sie beträgt vorzugsweise 4 bis 60 µm, insbesondere 5 bis 30 µm, vorzugsweise 6 bis 25 µm,
wobei die Basisschicht etwa 40 bis 100 % der Gesamtfoliendicke ausmacht.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt:

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstrekungsverhältnisse liegen im Bereich von 4 bis 8 vorzugsweise 5 bis 6. Die Querstreckverhältnisse liegen im Bereich von 5 bis 10, vorzugsweise 7 bis 9.

An die biaxiale Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100 °C, vorzugsweise 20 bis 50°C, zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung vorzugsweise bei 80 bis 150°C und die Querstreckung vorzugsweise bei 120 bis 170 °C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäßen Folien zeichnen sich durch eine deutlich verbesserte Barriere gegenüber Wasserdampf aus. Überraschenderweise wurde gefunden, daß die guten Barrierewerte die durch die Zugabe von Harz erzielt werden durch die Zugabe von Wachs mit einem ausgewählten Mw von 200 bis 700 noch weiter gesenkt werden können. Dadurch ist es möglich eine Folie mit außergewöhnlich Barrierewerten anzubieten oder bei vergleichbaren Barrierewerten die nach dem Stand der Technik übliche Menge an Harz zu reduzieren.

Zur Charakterisierung der Rohstoffe und der Folien wurden die folgenden Meßmethoden benutzt:

Schmelzflußindex

Der Schmelzflußindex wurde nach DIN 53 735 bei 21,6 N Belastung und 230 °C gemessen.

Schmelzpunkt

DSC-Messung, Maximum der Schmelzkurve, Aufheizgeschwindigkeit 20 °C/min.

Wasserdampf- und Sauerstoffdurchlässigkeit

Die Wasserdampfdurchlässigkeit wird gemäß DIN 53 122 Teil 2 bestimmt.

Oberflächenspannung

Die Oberflächenspannung wurde mittels der sogenannten Tintenmethode (DIN 53 364) bestimmt.

Molekulargewichtsbestimmung

Die mittleren Molmassen Mw und Mn und die mittlere Molmassen-Dispersität Mw/Mn wurden in Anlehnung an DIN 55672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (≈135°C) durchgeführt.

Isotaktischer Anteil

Der isotaktische Anteil des Homopolymeren kann in Näherung durch die unlösliche Fraktion des Rohstoffes in n-Heptan charakterisiert werden. Üblicherweise führt man eine Soxlet-Extraktion mit siedendem n-Heptan durch, wobei es zweckmäßig ist das Soxlet anstelle von Granulat mit einem Preßling zu befüllen. Die Dicke des Preßlings sollte hierbei 500 Mikrometer nicht übersteigen. Für die quantitative Erfassung des n-heptan unlöslichen Anteils des Homopolymeren ist es von entscheidender Bedeutung, eine ausreichende Extraktionszeit von 8 bis 24 Stunden sicherzustellen.

Die operationelle Definition des isotaktischen Anteils $PP_{iso}$ in Prozent ist gegeben durch das Verhältnis der Gewichte der getrockneten n-heptanunlöslichen Fraktion zur Einwaage:

$$PP_{iso} = 100x \text{ (n-heptanunlösliche Fraktion/Einwaage)}$$

Eine Analyse des getrockneten n-Heptan-Extraktes zeigt, daß dieser in der Regel nicht aus reinem ataktischen Propylenhomopolymeren besteht. Bei der Extraktion werden auch aliphatische und olefinische Oligomere, insbesondere isotaktische Oligomere sowie auch mögliche Zusatzstoffe wie z. B. hydrierte Kohlenwasserstoffharze und Wachs, miterfaßt.

Kettenisotaxie-Index

Der oben definierte isotaktische Anteil $PP_{iso}$ bestimmt als n-heptan unlöslicher Anteil ist für die Charakterisierung der Kettenisotaxie des Homopolymeren nicht ausreichend. Es erweist sich als sinnvoll, den Kettenisotaxie-Index II des Homopolymeren mittels hochauflösender $^{13}C$-NMR-Spektroskopie zu bestimmen, wobei als NMR-Probe

nicht der Originalrohstoff, sondern dessen n-heptanunlösliche Fraktion zu wählen ist. Zur Charakterisierung der Isotaxie von Polymerketten benutzt man in der Praxis meist den $^{13}C$-NMR-spektroskopischen Triaden-Isotaxie-Index II (Triaden).

Bestimmung des triadenbezogenen Kettenisotaxie-Index II (Triaden)

Die Bestimmung des Kettenisotaxie-Index II (Triaden) des n-heptanunlöslichen Anteils des Homopolymeren sowie der Folie wird aus dessen bzw. deren $^{13}C$-NMR-Spektrum bestimmt. Man vergleicht die Intensitäten von Triaden-Signalen, welche aus den Methylgruppen mit unterschiedlichen lokalen Umgebungen resultieren.
Hinsichtlich der Auswertung des $^{13}C$-NMR-Spektrums sind zwei Fälle zu unterscheiden:

A) Der untersuchte Rohstoff ist ein Propylenhomopolymer ohne statistischen $C_2$-Gehalt.

B) Der untersuchte Rohstoff ist ein Propylenhomopolymer mit einem geringen statistischen $C_2$-Gehalt, im folgenden $C_2$-$C_3$-Copolymer genannt.

**Fall A:**

Der Kettenisotaxie-Index des Homopolymeren wird aus dessen $^{13}C$-NMR-Spektrum bestimmt. Man vergleicht die Intensitäten von Signalen, welche aus den Methylgruppen mit unterschiedlicher Umgebung resultieren. Im $^{13}C$-NMR-Spektrum eines Homopolymeren treten im wesentlichen drei Gruppen von Signalen, sogenannte Triaden, auf.

1. Bei einer chemischen Verschiebung von etwa 21 bis 22 ppm tritt die "mm-Triade" auf, welche den Methylgruppen mit links und rechts unmittelbar benachbarten Methylgruppen zugeordnet wird.

2. Bei einer chemischen Verschiebung von etwa 20,2 bis 21 ppm tritt die "mr-Triade" auf, welche den Methylgruppen mit links oder rechts unmittelbar benachbarten Methylgruppen zugeordnet wird.

3. Bei einer chemischen Verschiebung von etwa 19,3 bis 20 ppm tritt die "rr-Triade" auf, welche den Methylgruppen ohne unmittelbar benachbarte Methylgruppen zugeordnet wird.

Die Intensitäten der zugeordneten Signalgruppen werden als Integral der Signale bestimmt. Der Kettenisotaxie-Index ist wie folgt definiert:

$$II\ Triaden = \frac{J_{mm} + 0{,}5\ J_{mr}}{J_{mm} + J_{mr} + J_{rr}} \cdot 100$$

worin $J_{mm}$, $J_{mr}$ und $J_{rr}$ die Integrale der zugeordneten Signalgruppen bedeuten.

**Fall B:**

Im $^{13}C$-NMR Spektrums eines Ethylen-Propylen-Copolmeren liegt die chemische Verschiebung der interessierenden Methylgruppen im Bereich 19 bis 22 ppm. Das Spektrum der Methylgruppen kann in drei Blöcke unterteilt werden. In diesen Blöcken erscheinen die $CH_3$-Gruppen in triadischen Sequenzen, deren Zuordnung zu den lokalen Umgebungen im folgenden näher erläutert wird:

**Block 1:**

$CH_3$-Gruppen in der PPP-Sequenz (mm-Triade)

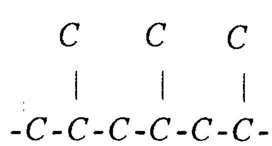

**Block 2:**

$CH_3$-Gruppen in der PPP-Sequenz (mr oder rm-Triaden)

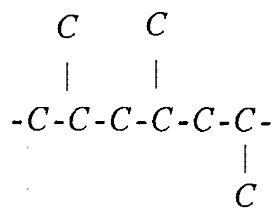

und $CH_3$-Gruppen in der EPP-Sequenz (m-Kette):

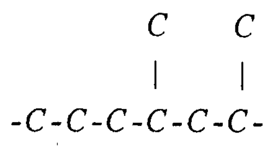

**Block 3**

$CH_3$-Gruppen in der PPP-Sequenz (rr-Triaden):

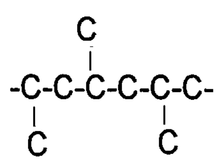

$CH_3$-Gruppen in einer EPP-Sequenz (r-Kette):

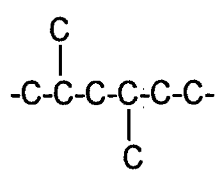

$CH_3$-Gruppen in einer EPE-Sequenz:

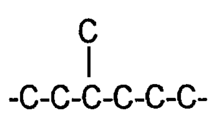

Bei der Bestimmung des triadenbezogenen Kettenisotaxie-Index II (Triaden) des n-heptanunlöslichen Anteils eines Ethylen-Propylen-Copolymers werden nur PPP-Triaden in Betracht gezogen, d. h. nur solche Propylen-Einheiten, die zwischen zwei benachbarten Propylen-Einheiten liegen (siehe auch EP-B-0 115 940, Seite 3, Zeilen 48 und 49).

Die Definition des Triaden-Isotaxie-Index eines Ethylen-Propylen-Copolymeren lautet:

$$II\ (Triaden) = 100x(J_{mm}/J_{ppp})$$

Berechnung des Kettenisotaxie-Index eines Ethylen-Propylen-Copolymers:

1. $J_{mm}$ ist gegeben durch das Peakintegral von Block 1.

2. Berechne das Integral ($J_{gesamt}$) aller Methylgruppenpeaks in den Blöcken 1, 2 und 3.

3. Durch einfache Betrachtungen läßt sich zeigen, daß $J_{ppp}=J_{gesamt}-J_{EPP}-J_{EPE}$.

Probenvorbereitung und Messung:

60 bis 100 mg Polypropylen werden in 10 mm-NMR-Röhrchen eingewogen und Hexachlorbutadien und Tetrachlorethan in einem Mischungsverhältnis von etwa 1,5:1 zugegeben, bis eine Füllhöhe von ca. 45 mm erreicht ist. Die Suspension wird so lange (in der Regel ca. eine Stunde) bei ca. 140 °C aufbewahrt, bis eine homogene Lösung entstanden ist. Um den Lösevorgang zu beschleunigen, wird die Probe von Zeit zu Zeit mit einem Glasstab gerührt.

Die Aufnahme des $^{13}C$-NMR-Spektrums erfolgt bei erhöhter Temperatur (in der Regel 365 K) unter Standardmeßbedingungen (halbquantitativ).

**Referenzen:**

W.O. Crain, Jr., A. Zambelli, and J.D. Roberts, Macromolecules, 4,330 (1971)

A. Zambelli, G. Gatti, C. Sacchi, W.O. Crain, Jr., and J.D. Roberts, Macromolecules, 4,475 (1971)

C.J. Carman and C.E. Wilkes, Rubber Chem. Technol. 44,781 (1971)

**Beispiel 1**

Es wurde durch Coextrusion und anschließende stufenweise Orientierung in Längs- und Querrichtung eine transparente dreischichtige Folie mit symmetrischem Aufbau mit einer Gesamtdicke von 20 µm hergestellt. Die Deckschichten hatten eine Dicke von jeweils 0,6 µm.

| A-Basisschicht: | |
|---|---|
| 86,85 Gew.-% | hochisotaktisches Propylenhomopolymer mit einem Schmelzpunkt von 166 °C und einem Schmelzflußindex von 3,4 g/10min, wobei der n-heptanunlösliche Anteil einen Kettenisotaxie-Index von 98 % hatte. |
| 10,0 Gew.-% | Kohlenwasserstoffharz Erweichungspunkt 120 °C mit einem mittleren Molekulargewicht Mw von 1000. |
| 3,0 Gew.-% | Polyethylenwachs mit einem mittleren Molekulargewicht Mn von 500 und Molekulargewichtsverteilung Mw/Mn von 1,08 |
| 0,15 Gew.-% | N,N-bis-ethoxyalkylamin (Antistatikum) |

| B-Deckschichten: | |
|---|---|
| ca. 75 Gew.-% | statistisches Ethylen-Propylen-Copolymeres mit einem $C_2$-Gehalt von 4,5 Gew.-% |
| ca. 25 Gew.-% | statistische Ethylen-Propylen-Butylen-Terpolymer mit einem Ethylengehalt von 3 Gew.-% und einem Butylengehalt von 7 Gew.-% (Rest Propylen) |
| 0,33 Gew.-% | $SiO_2$ als Antiblockmittel mit einer mittleren Teilchengröße von 2 µm |
| 0,90 Gew.-% | Polydimethylsiloxan mit einer Viskosität von 30 000 $mm^2/s$ |

Die Herstellungsbedingungen in den einzelnen Verfahrensschritten waren:

| | | | |
|---|---|---|---|
| Extrusion | Temperaturen | Basisschicht | 260 °C |
| | | Deckschichten | 240 °C |
| | Temperatur der Abzugswalze | | 20 °C |
| Längsstreckung | Temperatur | | 110 °C |
| | Längsstreckverhältnis | | 5,5 |
| Querstreckung | Temperatur | | 160 °C |
| | Querstreckverhältnis | | 9 |
| Fixierung | Temperatur | | 140 °C |
| | Konvergenz | | 20 % |

Bei dem Querstreckverhältnis $\lambda_Q$ = 9 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

**Beispiel 2**

Es wurde eine Folie wie in Beispiel 1 beschrieben hergestellt. An Stelle des hochisotaktischen Propylenhomopolymers wurde ein üblicher Rohstoff mit einem Schmelzpunkt von 165°C und einem Schmelzflußindex von 3,5 g/10min eingesetzt. Der Kettenisotaxieindex des n-heptanunlöslichen Anteils dieses Polypropylens betrug 94%. Die übrige Zusammensetzung und die Herstellbedingungen wurden gegenüber Beispiel 1 nicht geändert.

**Beispiel 3**

Es wurde eine Folie wie in Beispiel 2 beschrieben hergestellt. Im Unterschied zu Beispiel 2 enthielt die Folie jetzt in der Basisschicht 8 Gew.-% des gleichen Kohlenwasserstoffharzes. Die übrige Zusammensetzung und die Herstellbedingungen wurden gegenüber Beispiel 2 nicht geändert

**Beispiel 4**

Es wurde eine Folie wie in Beispiel 1 beschrieben hergestellt. Im Unterschied zu Beispiel 1 enthielt die Folie jetzt in der Basisschicht 8 Gew.-% des gleichen Kohlenwasserstoffharzes. Die übrige Zusammensetzung und die Herstellbedingungen wurden gegenüber Beispiel 1 nicht geändert.

**Beispiel 5**

Es wurde eine Folie wie in Beispiel 4 beschrieben hergestellt. Im Unterschied zu Beispiel 4 enthielt die Folie jetzt in der Basisschicht 5 Gew.-% des gleichen Polyethylenwachses. Die übrige Zusammensetzung und die Herstellbedingungen wurden gegenüber Beispiel 4 nicht geändert.

**Beispiel 6**

Es wurde eine Folie wie in Beispiel 3 beschrieben hergestellt. Im Unterschied zu Beispiel 3 enthielt die Folie jetzt in der Basisschicht 10 Gew.-% des gleichen Kohlenwasserstoffharzes und 5 Gew.-% des gleichen Wachses wie in Beispiel 3 beschrieben. Die übrige Zusammensetzung und die Herstellbedingungen wurden gegenüber Beispiel 3 nicht geändert.

**Beispiel 7**

Es wurde eine Folie wie in Beispiel 3 beschrieben hergestellt. Im Unterschied zu Beispiel 3 enthielt die Folie jetzt in der Basisschicht 5 Gew.-% des gleichen Wachses wie in Beispiel 3 beschrieben. Die übrige Zusammensetzung und die Herstellbedingungen wurden gegenüber Beispiel 3 nicht geändert.

**Beispiel 8**

Es wurde eine Folie wie in Beispiel 1 beschrieben hergestellt. Im Unterschied zu Beispiel 1 enthielt die Folie jetzt in der Basisschicht 5 Gew.-% des gleichen Wachses wie in Beispiel 1 beschrieben. Die übrige Zusammensetzung und die Herstellbedingungen wurden gegenüber Beispiel 1 nicht geändert.

**Beispiel 9**

Es wurde eine Folie wie in Beispiel 3 beschrieben hergestellt. Im Unterschied zu Beispiel 3 enthielt die Folie jetzt in der Basisschicht 3 Gew.-% eines makrokristallinen Paraffinwachses. Die übrige Zusammensetzung und die Herstellbedingungen wurden gegenüber Beispiel 3 nicht geändert.

**Beispiel 10**

Es wurde eine Folie wie in Beispiel 2 beschrieben hergestellt. Im Unterschied zu Beispiel 2 enthielt die Folie jetzt in der Basisschicht 5 Gew.-% eines makrokristallinen Paraffinwachses. Die übrige Zusammensetzung und die Herstellbedingungen wurden gegenüber Beispiel 2 nicht geändert.

**Vergleichsbeispiel 1**

Es wurde eine Folie wie in Beispiel 3 beschrieben hergestellt. Im Unterschied zu Beispiel 3 enthielt die Folie jetzt in der Basisschicht kein Polyethylenwachs. Die übrige Zusammensetzung und die Herstellbedingungen wurden gegenüber Beispiel 3 nicht geändert.

**Vergleichsbeispiel 2**

Es wurde eine Folie wie in Beispiel 3 beschrieben hergestellt. Im Unterschied zu Beispiel 3 enthielt die Folie jetzt in der Basisschicht kein Kohlenwasserstoffharzes. Die übrige Zusammensetzung und die Herstellbedingungen wurden gegenüber Beispiel 3 nicht geändert.

**Vergleichsbeispiel 3**

Es wurde eine Folie wie in Beispiel 3 beschrieben hergestellt. Im Unterschied zu Beispiel 3 enthielt die Folie jetzt in der Basisschicht ein Polyethylenwachs mit einem mittleren Molekulargewicht Mn von 1000 und einer Molekulargewichtsverteilung Mw/Mn von ebenfalls 1,08. Die übrige Zusammensetzung und die Herstellbedingungen wurden gegenüber Beispiel 3 nicht geändert.

**Vergleichsbeispiel 4**

Es wurde eine Folie wie in Beispiel 3 beschrieben hergestellt. Im Unterschied zu Beispiel 3 enthielt die Folie jetzt in der Basisschicht ein Kohlenwasserstoffharz mit einem mittleren Molekulargewicht Mw von 2000. Die übrige Zusammensetzung und die Herstellbedingungen wurden gegenüber Beispiel 3 nicht geändert.

**Vergleichsbeispiel 5**

Es wurde eine Folie wie in Vergleichsbeispiel 1 beschrieben hergestellt. Im Unterschied zu Vergleichsbeispiel 1 enthielt die Folie jetzt in der Basisschicht das in Beispiel 1 beschriebene hochisotaktische Propylenhomopolymer. Die übrige Zusammensetzung und die Herstellbedingungen wurden gegenüber Vergleichsbeispiel 1 nicht geändert.

**Vergleichsbeispiel 6**

Es wurde eine Folie wie in Vergleichsbeispiel 3 beschrieben hergestellt. Im Unterschied zu Vergleichsbeispiel

3 enthielt die Folie jetzt in der Basisschicht das in Beispiel 1 beschriebene hochisotaktische Propylenhomopolymer. Die übrige Zusammensetzung und die Herstellbedingungen wurden gegenüber Vergleichsbeispiel 3 nicht geändert.

**Vergleichsbeispiel 7**

Es wurde eine Folie wie in Beispiel 2 beschrieben hergestellt. Im Unterschied zu Beispiel 2 enthielt die Folie jetzt in der Basisschicht kein Polyethylenwachs. Die übrige Zusammensetzung und die Herstellbedingungen wurden gegenüber Beispiel 2 nicht geändert.

**Vergleichsbeispiel 8**

Es wurde eine Folie wie in Vergleichsbeispiel 2 beschrieben hergestellt. Im Unterschied zu Vergleichsbeispiel 2 enthielt die Folie jetzt in der Basisschicht auch kein Polyethylenwachs. Die übrige Zusammensetzung und die Herstellbedingungen wurden gegenüber Vergleichsbeispiel 2 nicht geändert.

**Vergleichsbeispiel 9**

Es wurde eine Folie wie in Beispiel 9 beschrieben hergestellt. Im Unterschied zu Beispiel 9 enthielt die Folie jetzt in der Basisschicht kein Harz. Die übrige Zusammensetzung und die Herstellbedingungen wurden gegenüber Beispiel 9 nicht geändert.

**Vergleichsbeispiel 10**

Es wurde eine Folie wie in Beispiel 10 beschrieben hergestellt. Im Unterschied zu Beispiel 10 enthielt die Folie jetzt in der Basisschicht kein Harz. Die übrige Zusammensetzung und die Herstellbedingungen wurden gegenüber Beispiel 10 nicht geändert.

Die Wasserdampfbarriere der Folien nach den Beispielen und Vergleichsbeispielen sind in der nachstehenden Tabelle zusammengefaßt.

## TABELLE 1

| Beipiele | Standard Poly-propylen | Hoch-isotaktisches Poly-propylen | Harz-gehalt in Gew.-% | Wachs-gehalt in Gew.-% | Permeationskoeffizient nach DIN 53122 bei 38°C und 90% relativer Feuchte g 20µm/100in² 24h | Permeationskoeffizient nach DIN 53122 bei 23 °C und 85% relativer Feuchte g 20µm/m² 24h |
|---|---|---|---|---|---|---|
| B1 | | X | 10 | 3 | 0,14 | 0,45 |
| B2 | X | | 10 | 3 | 0,17 | 0,56 |
| B3 | X | | 8 | 3 | 0,19 | 0,62 |
| B4 | | X | 8 | 3 | 0,16 | 0,53 |
| B5 | | X | 8 | 5 | 0,13 | 0,46 |
| B6 | X | | 10 | 5 | 0,12 | 0,42 |
| B7 | X | | 8 | 5 | 0,15 | 0,52 |
| B8 | | X | 10 | 5 | 0,10 | 0,35 |
| B9 | X | | 8 | 3 | 0,18 | 0,61 |
| B10 | X | | 10 | $5_{Paraffinwachs}$ | 0,37 | 0,11 |

B = Beispiel;

## TABELLE 2

| Vergleichs-beispiele | Standard Poly-propylen | Hoch-isotaktisches Poly-propylen | Harz-gehalt in Gew.-% | Wachs-gehalt in Gew.-% | Permeationskoeffizient nach DIN 53122 bei 38°C und 90% relativer Feuchte g 20µm/100in² 24h | Permeationskoeffizient nach DIN 53122 bei 23 °C und 85% relativer Feuchte g 20µm/m² 24h |
|---|---|---|---|---|---|---|
| VB1 | X | | 8 | | 0,27 | 0,95 |
| VB2 | X | | | 3 | 0,31 | 1,08 |
| VB3 | X | | 8 | $3_{(Mn1000)}$ | 0,28 | 0,97 |
| VB4 | X | | $8_{(Mn2000)}$ | 3 | 0,29 | 1,05 |
| VB5 | | X | 8 | | 0,22 | 0,85 |
| VB6 | | X | 8 | $3_{(Mn1000)}$ | 0,23 | 0,87 |
| VB7 | X | | 10 | | 0,25 | 0,87 |
| VB8 | X | | | | 0,37 | 1,28 |
| VB9 | X | | | 3 | 0,3 | 1,07 |
| VB10 | X | | | 5 | 0,24 | 0,9 |

VB = Vergleichsbeispiel

## Patentansprüche

1. Mehrschichtige biaxial orientierte Polypropylenfolie aus einer Basisschicht und mindestens einer siegelfähigen Deckschicht, welche in ihrer Basisschicht eine Kombination aus Harz und Wachs enthält, **dadurch gekennzeichnet, dass** die Basisschicht ein Harz mit einem mittleren Molekulargewicht Mw von 600 bis 1500,
wobei das Harz ein Erdölharz, Styrolharz, Cyclopentadienharz oder ein Terpenharz ist, und ein Wachs mit einem mittleren Molekulargewicht Mn von 200 bis 700 enthält, wobei das Wachs ein teil- oder hochkristallines Polyethylenwachs und/oder ein Paraffinwachs ist.

2. Polypropylenfolie gemäss Anspruch 1, **dadurch gekennzeichnet, dass** der n-heptan unlösliche Anteil des Polypropylens der Basisschicht einen Kettenisotaxie-Index, gemessen mittels 3C-NMR-Spektroskopie, von mindestens 95 % aufweist

3. Polypropylenfolie gemäss Anspruch 1 und/oder 2, **dadurch gekennzeichnet, dass** die Basisschicht ein Polypropylen enthält, dessen Mw/Mn 1 bis 10 ist.

4. Polypropylenfolie gemäss einem oder mehreren der Ansprüche 1 bis 3, **dadurch gekennzeichnet, dass** das Propylenpolymer der Basisschicht peroxidisch abgebaut ist oder mittels Metallocenkatalysator hergestellt ist.

5. Polypropylenfolie gemäss einem oder mehreren der Ansprüche 1 bis 4, **dadurch gekennzeichnet, dass** sie als Harz ein Styrolpolymerisat, ein Methylstyrol-Styrol-Copolymerisat, ein Pentadien-bzw. Cyclopentadiencopolymerisat, ein $\alpha$-oder ss-Pinen-Polymerisat, Kolophonium oder Kolophoniumderivate oder Terpenpolymerisate und hydrierte Verbindungen hiervon bzw. ein hydriertes a-Methylstyrol-Vinyltoluol-Copolymerisat oder gegebenenfalls Mischungen von diesen enthält.

6. Polypropylenfolie gemäss einem oder mehreren der Ansprüche 1 bis 5, **dadurch gekennzeichnet, dass** das Kohlenwasserstoffharz in einer Menge von 1 bis 15 Gew.-%, bezogen auf das Gewicht der Basisschicht, enthalten ist.

7. Polypropylenfolie gemäss einem oder mehreren der Ansprüche 1 bis 6, **dadurch gekennzeichnet, dass** das Wachs in einer Menge von 1 bis 10 Gew.-%, bezogen auf das Gewicht der Basisschicht, enthalten ist.

8. Polypropylenfolie gemäss einem oder mehreren der Ansprüche 1 bis 7, dass das Polyethylenwachs ein Mw/Mn von 1 bis 2 aufweist.

9. Polypropylenfolie gemäss einem oder mehreren der Ansprüche 1 bis 8, **dadurch gekennzeichnet, dass** sie beidseitig eine siegelfähige Deckschicht aus $\alpha$-olefinischen Polymeren aufweist.

10. Polypropylenfolie gemäss einem oder mehreren der Ansprüche 1 bis 9, **dadurch gekennzeichnet, dass** das Polymere der Deckschicht/en peroxidisch abgebaut ist und der Abbaufaktor im Bereich von 3 bis 15, vorzugsweise 6 bis 10, liegt.

11. Polypropylenfolie gemäss einem oder mehreren der Ansprüche 1 bis 10, **dadurch gekennzeichnet, dass** ein- oder beidseitige Zwischenschicht/en aus $\alpha$-olefinischen Polymeren zwischen der Basis-und der/den Deckschicht/en angebracht ist/sind.

12. Polypropylenfolie gemäss einem oder mehreren der Ansprüche 1 bis 11, **dadurch gekennzeichnet, dass** die Dicke der Folie 4 bis 60$\mu$m, insbesondere 5 bis 30 $\mu$m und vorzugsweise 6 bis 25 $\mu$m beträgt, wobei die Basisschicht etwa 40 bis 60 % der Gesamtdicke ausmacht.

13. Polypropylenfolie gemäss einem oder mehreren der Ansprüche 1 bis 12, **dadurch gekennzeichnet, dass** die Basisschicht Antistatikum, vorzugsweise tertiäres aliphatisches Amin, enthält.

14. Polypropylenfolie gemäss einem oder mehreren der Ansprüche 1 bis 13, **dadurch gekennzeichnet, dass** die Deckschicht/en Gleitmittel, vorzugsweise Polydimethylsiloxan, und Antiblockmittel, vorzugsweise Si02, enthält/enthalten.

15. Polypropylenfolie gemäss einem oder mehreren der Ansprüche 1 bis 14, **dadurch gekennzeichnet, dass** alle

Schichten der Folie Neutralisationsmittel und Stabilisator enthalten.

**16.** Verfahren zur Herstellung einer Polypropylenfolie gemäss Anspruch 1, **dadurch gekennzeichnet, dass** die Orientierung in Längsrichtung mit einem Längsstreckverhältnis von 5 : 1 bis 9 : 1 und in Querrichtung mit einem Querstreckverhältnis von 5 : 1 bis 10 : 1 erfolgt.

**17.** Verwendung der Polypropylenfolie gemäss einem oder mehreren Ansprüchen 1 bis 15 als Verpackungsfolie, vorzugsweise Zigaretteneinschlags- folie.

## Claims

**1.** Multilayered biaxially oriented polypropylene film comprising a base layer and at least one heat-sealable top layer which comprises, in its base layer, a combination of resin and wax, **characterized in that** the base layer comprises a resin having a mean molecular weight Mw of from 600 to 1500, where the resin is a petroleum resin, styrene resin, cyclopentadiene resin or terpene resin, and a wax having a mean molecular weight Mn of from 200 to 700, where the wax is a partially or highly crystalline polyethylene wax and/or a paraffin wax.

**2.** Polypropylene film according to Claim 1, **characterized in that** the n-heptane-insoluble content of the polypropylene of the base layer has a chain isotacticity index, measured by 3 C-NMR spectroscopy, of at least 95%.

**3.** Polypropylene film according to Claim 1 and/or 2, **characterized in that** the base layer comprises a polypropylene whose Mw/Mn is from 1 to 10.

**4.** Polypropylene film according to one or more of Claims 1 to 3, **characterized in that** the propylene polymer of the base layer has been peroxidically degraded or prepared by means of a metallocene catalyst.

**5.** Polypropylene film according to one or more of Claims 1 to 4, **characterized in that** it comprises, as resin, a styrene polymer, a methylstyrene-styrene copolymer, a pentadiene or cyclopentadiene copolymer, an a- or ss-pinene polymer, colophony or colophony derivatives or terpene polymers and hydrogenated compounds thereof, or a hydrogenated $\alpha$-methylstyrene-vinyltoluene copolymer or, if desired, mixtures thereof.

**6.** Polypropylene film according to one or more of Claims 1 to 5, **characterized in that** the hydrocarbon resin is present in an amount of from 1 to 15% by weight, based on the weight of the base layer.

**7.** Polypropylene film according to one or more of Claims 1 to 6, **characterized in that** the wax is present in an amount of from 1 to 10% by weight, based on the weight of the base layer.

**8.** Polypropylene film according to one or more of Claims 1 to 7, **characterized in that** the polyethylene wax has an Mw/Mn of from 1 to 2.

**9.** Polypropylene film according to one or more of Claims 1 to 8, **characterized in that** it has a heat-sealable top layer of $\alpha$-olefinic polymers on both sides.

**10.** Polypropylene film according to one or more of Claims 1 to 9, **characterized in that** the polymer of the top layer (s) has been peroxidically degraded and the degradation factor is in the range from 3 to 15, preferably from 6 to 10.

**11.** Polypropylene film according to one or more of Claims 1 to 10, **characterized in that** interlayer(s) of $\alpha$-olefinic polymers is (are) applied on one or both sides between the base layer and the top layer(s).

**12.** Polypropylene film according to one or more of Claims 1 to 11, **characterized in that** the thickness of the film is from 4 to 60 $\mu$m, in particular from 5 to 30 $\mu$m and preferably from 6 to 25 $\mu$m, where the base layer makes up from about 40 to 60% of the total thickness.

**13.** Polypropylene film according to one or more of Claims 1 to 12, **characterized in that** the base layer comprises an antistatic, preferably a tertiary aliphatic amine.

**14.** Polypropylene film according to one or more of Claims 1 to 13, **characterized in that** the top layer(s) comprise(s)

a lubricant, preferably polydimethylsiloxane, and an antiblocking agent, preferably SiO2.

**15.** Polypropylene film according to one or more of Claims 1 to 14, **characterized in that** all layers of the film comprise a neutralizer and a stabilizer.

**16.** Process for the production of a polypropylene film according to Claim 1, **characterized in that** the orientation in the longitudinal direction is carried out with a longitudinal stretching ratio of from 5:1 to 9:1, and the orientation in the transverse direction is carried out with a transverse stretching ratio of from 5:1 to 10:1.

**17.** Use of the polypropylene film according to one or more of Claims 1 to 15 as packaging film, preferably as cigarette wrapping film.

**Revendications**

**1.** Film de polypropylène multicouches biaxialement orienté constitué par une couche de base et au moins une couche de surface thermoscellable, lequel contient dans sa couche de base une combinaison de résine et de cire, **caractérisé en ce que** la couche de base contient une résine d'une masse moléculaire relative moyenne Mw de 600 à 1500, la résine étant une résine de pétrole, une résine de styrène, une résine de cyclopentadiène ou une résine terpénique et une cire avec une masse moléculaire relative moyenne Mn de 200 à 700, la cire étant une cire de polyéthylène à cristallinité partielle ou élevée et/ou une cire de paraffine.

**2.** Film de polypropylène selon la revendication 1, **caractérisé en ce que** la part non soluble à l'heptane-n du polypropylène de la couche de base présente un indice isotactique de chaîne mesuré par spectroscopie R.M.N. 3C d'au moins 95 %.

**3.** Film de polypropylène selon la revendication 1 et/ou 2, **caractérisé en ce que** la couche de base contient un polypropylène dont le rapport Mw/Mn est de 1 à 10.

**4.** Film de polypropylène selon l'une ou plusieurs des revendications 1 à 3, **caractérisé en ce que** le polymère de propylène de la couche de base est décomposé aux peroxydes ou fabriqué au moyen d'un catalyseur métallocène.

**5.** Film de polypropylène selon l'une ou plusieurs des revendications 1 à 4, **caractérisé en ce qu'**il contient en tant que résine un polymérisat styrène, un copolymérisat méthylstyrène-styrène, un copolymérisat pentadiène ou un copolymérisat cyclopentadiène, un polymérisat a-pinène ou ss-pinène, de la colophane ou des dérivés de colophane ou des polymérisats de terpène et des liaisons hydrogénées, dont un copolymérisat hydrogéné a-méthylstyrène-vinyltoluène ou le cas échéant des mélanges de ceux-ci.

**6.** Film de polypropylène selon l'une ou plusieurs des revendications 1 à 5, **caractérisé en ce que** la résine d'hydrocarbure est contenue dans une quantité de 1 à 15 % en poids, rapporté au poids de la couche de base.

**7.** Film de polypropylène selon l'une ou plusieurs des revendications 1 à 6, **caractérisé en ce que** la cire est contenue dans une quantité de 1 à 10 % en poids, rapporté au poids de la couche de base.

**8.** Film de polypropylène selon l'une ou plusieurs des revendications 1 à 7, **caractérisé en ce que** la cire de polyéthylène présente un rapport Mw/Mn de 1 à 2.

**9.** Film de polypropylène selon l'une ou plusieurs des revendications 1 à 8, **caractérisé en ce qu'**il présente sur les deux faces une couche de surface thermoscellable en polymères $\alpha$-oléfiniques.

**10.** Film de polypropylène selon l'une ou plusieurs des revendications 1 à 9, **caractérisé en ce que** le polymère de la/des couche(s) de surface est décomposé aux peroxydes et le facteur de décomposition se situe dans une plage de 3 à 15, de préférence de 6 à 10.

**11.** Film de polypropylène selon l'une ou plusieurs des revendications 1 à 10, **caractérisé en ce qu'**une/des couche (s) intermédiaire(s) en polymères $\alpha$-oléfiniques est/sont appliquée(s) sur une face ou sur les deux faces entre la couche de base et la/les couche(s) de surface.

**12.** Film de polypropylène selon l'une ou plusieurs des revendications 1 à 11, **caractérisé en ce que** l'épaisseur du film est de 4 à 60 µm, en particulier de 5 à 30 µm et de préférence de 6 à 25 µm, la couche de base faisant à peu près 40 à 60 % de l'épaisseur totale.

**13.** Film de polypropylène selon l'une ou plusieurs des revendications 1 à 12, **caractérisé en ce que** la couche de base contient un antistatique, de préférence une amine aliphatique tertiaire.

**14.** Film de polypropylène selon l'une ou plusieurs des revendications 1 à 13, **caractérisé en ce que** la/les couche (s) de surface contient/contiennent un agent glissant, de préférence du polydiméthylsiloxane et un agent anti blocking, de préférence du Si02.

**15.** Film de polypropylène selon l'une ou plusieurs des revendications 1 à 14, **caractérisé en ce que** toutes les couches du film contiennent un agent de neutralisation et un agent stabilisant.

**16.** Procédé destiné à la fabrication d'un film de polypropylène selon la revendication 1, **caractérisé en ce que** l'orientation dans le sens longitudinal s'effectue dans un rapport d'étirage longitudinal de 5 à 1 jusqu'à 9 à 1 et dans le sens transversal dans un rapport d'étirage transversal de 5 à 1 jusqu'à 10 à 1.

**17.** Utilisation du film de polypropylène selon l'une ou plusieurs des revendications 1 à 15, en tant que film d'emballage, de préférence de film d'empaquetage de cigarettes.